(19) **Europäisches Patentamt**

**European Patent Office**

**Office européen des brevets**

(11) **EP 1 110 049 B1**

(12) **FASCICULE DE BREVET EUROPEEN**

(45) Date de publication et mention
de la délivrance du brevet:
**10.12.2003 Bulletin 2003/50**

(51) Int Cl.⁷: **F28D 15/02**, B60N 2/44,
B60H 1/00

(21) Numéro de dépôt: **99940263.9**

(22) Date de dépôt: **31.08.1999**

(86) Numéro de dépôt international:
**PCT/FR99/02075**

(87) Numéro de publication internationale:
**WO 00/012948 (09.03.2000 Gazette 2000/10)**

(54) **PROCEDE ET SYSTEME POUR CONTROLER LA TEMPERATURE DES PAROIS D'UNE SURFACE SITUEE A L'INTERIEUR D'UNE ENCEINTE, APPLICATION DU PROCEDE ET UTILISATION DU SYSTEME**

VERFAHREN UND SYSTEM ZUR STEUERUNG DER DER WANDUNGSTEMPERATUR EINER OBERFLÄCHE EINER EINHAUSUNG, ANWENDUNG DES VERFAHRENS UND VERWENDUNG DES SYSTEMS

METHOD AND SYSTEM FOR CONTROLLING THE TEMPERATURE OF WALLS OF A SURFACE SITUATED INSIDE OF A HOUSING

(84) Etats contractants désignés:
**AT BE CH CY DE DK ES FI FR GB GR IE IT LI LU MC NL PT SE**

(30) Priorité: **31.08.1998 FR 9811046**

(43) Date de publication de la demande:
**27.06.2001 Bulletin 2001/26**

(73) Titulaire: **Armines**
**75272 Paris Cedex 06 (FR)**

(72) Inventeur: **CLODIC, Denis**
**F-75011 Paris (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**DE-A- 4 432 497        DE-A- 19 645 544**
**DE-U- 29 904 238        US-A- 3 738 702**

- **PATENT ABSTRACTS OF JAPAN vol. 015, no. 178 (M-1110), 8 mai 1991 (1991-05-08) & JP 03 042326 A (NIPPON CARBURETER CO LTD), 22 février 1991 (1991-02-22)**
- **PATENT ABSTRACTS OF JAPAN vol. 095, no. 011, 26 décembre 1995 (1995-12-26) & JP 07 218160 A (FUJIKURA LTD), 18 août 1995 (1995-08-18)**

## Description

La présente invention concerne un échangeur souple à effet caloduc associé à des circuits caloporteurs. Elle concerne plus particulièrement un procédé mettant en oeuvre de tels échangeurs souples pour contrôler la température des parois d'une surface plane et/ou gauche.

Le problème posé est de contrôler la température des parois d'une enceinte ou d'un élément, notamment un siège situé à l'intérieur d'un véhicule automobile, de manière à assurer le confort des utilisateurs. Le confort thermique des passagers dans les moyens de transport doit intégrer non seulement les conditions aérauliques, mais aussi les transferts thermiques avec les sièges. Deux situations principales existent :

- l'inconfort thermique car la température initiale du siège est trop élevée au moment où le passager va s'installer ou,
- au contraire, la température du siège est trop froide par rapport à l'optimum thermique.

D'autre part, il est souhaitable de fournir ou d'évacuer de la chaleur selon les conditions thermiques générales dans l'habitacle. Il s'agit donc d'opérer une véritable maîtrise des températures du corps au contact du siège.

Il est connu de placer sur les parties verticales et horizontales d'un siège des coussins percés d'un grand nombre d'ouvertures sur leurs faces tournées vers l'extérieur. De l'air conditionné est injecté dans les coussins et s'échappe par lesdites ouvertures. Un tel dispositif est décrit dans le brevet US 5 715 695 déposé le 27 août 1996 et délivré le 10 février 1998. Ce dispositif a pour effet de permettre de contrôler la température des parties du siège au contact de l'utilisateur. Cependant, il présente l'inconvénient de diffuser à l'intérieur de l'habitacle un flux d'air ayant circulé au plus près du corps des passagers. Il en résulte des nuisances (des odeurs, un taux d'humidité, etc. qui peuvent être incommodantes pour toutes les personnes présentes dans l'habitacle.

Le brevet US 3 738 702 (James W. JACOBS) décrit un siège de véhicule automobile comportant un circuit fermé caloporteur. Le passager s'assoit sur le siège dans lequel est inséré un coussin refroidissant parcouru par un fluide volatil. A la partie inférieure de ce coussin est aménagé un évaporateur. Un conduit relie la partie supérieure du coussin à un condenseur situé dans le véhicule à l'arrière du siège. Le fluide condensé retourne vers l'évaporateur via un circuit situé à l'arrière du siège. L'énergie calorifique provenant du passager est donc dissipée dans le véhicule. De ce fait, le confort de l'habitacle perd en qualité. La présente invention a pour objet de résoudre le problème posé sans présenter cet inconvénient.

Le procédé selon l'invention pour contrôler la température des parois d'une surface plane et/ou gauche située à l'intérieur d'une enceinte, notamment à l'intérieur de l'habitacle d'un véhicule, comprend les étapes ci-après.

On applique sur la surface dont il convient de contrôler la température une enveloppe souple épousant la forme de ladite surface. Cette enveloppe est composée d'un feuillet délimitant une chambre étanche, formant caloduc, de faible épaisseur par rapport à son étendue.

On introduit dans ladite chambre un fluide sous sa tension de vapeur à une température prédéterminée. Avantageusement on peut utiliser de l'eau.

On procède à un échange de chaleur entre le fluide contenu dans l'enveloppe souple et l'extérieur de ladite enceinte au moyen d'au moins une source froide et/ou d'une source chaude, formant échangeur de chaleur, en contact thermique avec l'enveloppe souple. Cet échange thermique est effectué en au moins une zone prédéterminée de ladite surface.

Ainsi :

- dans le cas où l'échange thermique s'effectue au contact d'une source chaude, le fluide sous tension de vapeur se vaporise instantanément au contact de la source chaude et extrait de la chaleur de ladite zone prédéterminée de la surface à refroidir,
- dans le cas où l'échange thermique s'effectue au contact d'une source froide, le fluide vaporisé se condense instantanément au contact de la source froide et apporte de la chaleur à ladite zone prédéterminée de la surface à réchauffer.

L'utilisation de l'effet caloduc permet, de manière connue en soi, d'évacuer ou d'apporter des calories à l'endroit exact de la surface où la température doit être contrôlée. Toutefois, grâce à l'échangeur de chaleur en relation avec l'extérieur de l'enceinte, les conditions thermiques générales de l'habitacle ne sont pas affectées.

De préférence, la ou les sources froides sont disposées aux points hauts de l'enveloppe souple. Il en résulte que le fluide condensé s'écoule par gravité vers les parties basses de l'enveloppe. De préférence également, la ou les sources chaudes sont disposées aux points bas de l'enveloppe souple.

Le procédé selon l'invention peut être appliqué au préconditionnement thermique ou au contrôle thermique des parois d'une habitacle et/ou d'un siège, notamment des surfaces d'un siège d'un véhicule sur lesquelles le passager est assis ou contre lesquelles il est adossé.

Avantageusement, en mode de fonctionnement été,

- la source froide comporte un échangeur de chaleur en relation avec l'extérieur de l'habitacle et placé à la tête du siège et

- la source chaude est constituée par toute ou partie de la surface du siège au contact de l'utilisateur.

De même, en mode de fonctionnement hiver,

- la source chaude comporte un échangeur de chaleur en relation avec l'extérieur de l'habitacle et placé à la partie inférieure du siège et
- la source froide est constituée par toute ou partie de la surface du siège au contact de l'utilisateur.

La présente invention concerne également un siège, notamment un siège de véhicule de transport, réalisé en mettant en oeuvre les procédés et les moyens ci-dessus décrits et ceux qui seront plus précisément décrits en se référant aux figures.

Le procédé selon l'invention peut être appliqué au préconditionnement thermique ou au contrôle thermique de toute ou partie des parois d'une enceinte, notamment celles d'un véhicule.

D'autres caractéristiques et avantages de l'invention apparaîtront à la lecture de la description de variantes de réalisation de l'invention, données à titre d'exemple indicatif et non limitatif, et de :

- la figure 1 qui représente une vue en perspective d'un siège de véhicule de transport en mode fonctionnement été (mode rafraîchissement),
- la figure 2 qui représente une vue en perspective d'un siège de véhicule de transport en mode fonctionnement hiver (mode chauffage),
- la figure 3 qui représente une vue en coupe, selon un plan vertical A - A, du siège représenté sur la figure 1,
- la figure 4 qui représente une vue en perspective d'un siège de véhicule et une vue schématique des circuits d'alimentation des échangeurs situés à la partie supérieure et à la partie inférieure du siège.

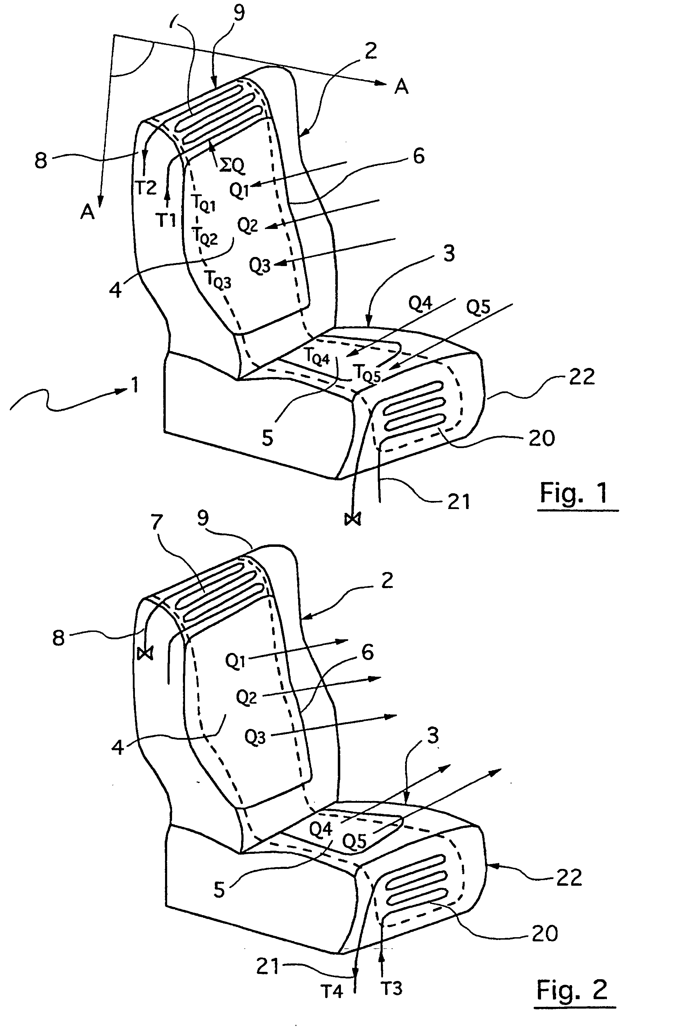

On va maintenant décrire la figure 1 qui représente une vue en perspective d'un siège de véhicule de transport en mode fonctionnement été (mode rafraîchissement). Le siège 1 comporte une partie sensiblement verticale 2 et une partie sensiblement horizontale 3. Le passager (non représenté) est assis sur la partie horizontale 3 et est adossé contre la partie verticale 2.

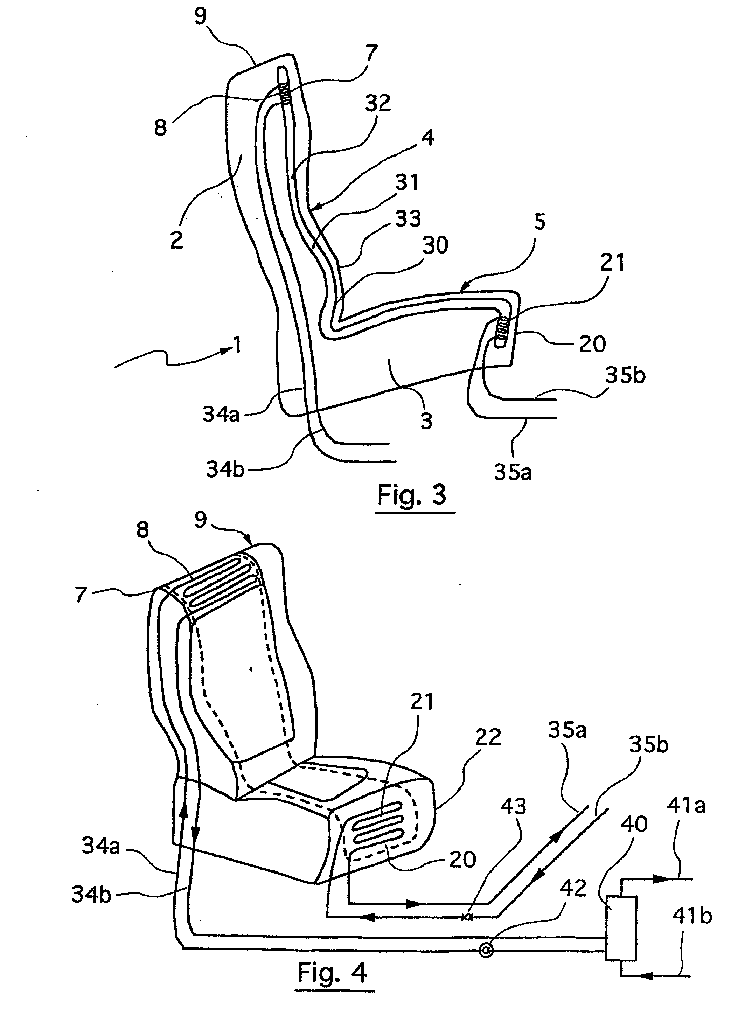

Son corps prend appui sur les surfaces externes gauches prédéterminées 4 et 5 du siège 1. Sur les surfaces prédéterminées 4 et 5 dont il convient de contrôler la température est appliquée une enveloppe souple 6 épousant la forme des surfaces 4 et 5. Cette enveloppe 6 est composée d'un feuillet 30 à double paroi (voir figure 3) réalisé en un matériau souple, par exemple en une matière plastique synthétique. Ce feuillet 30 délimite une chambre étanche 31 de faible épaisseur par rapport à son étendue. La chambre 31 contient un fluide 32 sous sa tension de vapeur à une température prédéterminée. Avantageusement on peut utiliser de l'eau. On procède à un échange de chaleur entre le fluide 32 contenu dans l'enveloppe souple 6, 31 et l'extérieur au moyen d'une source froide et d'une source chaude en contact thermique avec l'enveloppe souple.

En mode de fonctionnement été (ou rafraîchissement), celui représenté sur la figure 1,

- la source froide 7 comporte un échangeur de chaleur 8 placé à la tête 9 du siège 1 et
- la source chaude est constituée par les surfaces 4 et 5 du siège au contact de l'utilisateur.

L'échange thermique s'effectue au contact de la source chaude : les surfaces 4 et 5 du siège au contact de l'utilisateur ou les surfaces 4 et 5 recevant en l'absence du passager un flux solaire. Le fluide sous tension de vapeur se vaporise instantanément au contact de la source chaude et extrait de la chaleur de ladite zone prédéterminée de la surface à refroidir. Il vient se condenser à la partie supérieure du siège où est situé la source froide 7 constituée par l'échangeur 8. Cet échangeur 8 est réalisé en matière plastique souple. Il est en contact intime avec l'enveloppe 6. L'échangeur est alimenté par un circuit d'eau de refroidissement dont la température est nettement inférieure à la température de paroi de l'enveloppe souple 6. Typiquement la température de l'eau de refroidissement est inférieure de 2 à 10°C. Ce circuit d'eau peut être refroidi par un groupe frigorifique classique ou par tout autre type de système frigorifique. La chaleur est évacuée et, compte tenu de la grande efficacité des transferts entre l'enveloppe souple 6 et l'échangeur 8, la température superficielle du siège sera supérieure, typiquement de l'ordre de 2°C, à la température d'entrée d'eau de refroidissement. De la même manière, si un passager s'installe sur le siège et que sa température externe de vêtement est de l'ordre de 27 à 30 °C, selon les besoins de rafraîchissement, une quantité réglable de chaleur sera évacuée sous un très faible écart de température.

Le fluide condensé s'écoule par gravité vers les parties basses de l'enveloppe, au niveau des surfaces 4 et 5 du siège à refroidir.

Les équations thermiques en mode de fonctionnement rafraîchissement sont les suivantes :

$$T1 < T2$$

$$Tmf = (T1 + T2)/ 2$$

$$Tmf < Tai$$

$$Pertes + Somme des Qi = Q extrait$$

T1 désignant la température d'entrée de l'échangeur 8.

T2 désignant la température de sortie de l'échangeur 8.

Qi désignant la charge calorifique reçue de l'extérieur (du passager) par la zone i des surfaces 4 et 5.

Tai désignant les températures des zones i .

On va maintenant décrire la figure 2 qui représente une vue en perspective d'un siège de véhicule de transport en mode fonctionnement hiver (mode chauffage). On reconnaît la plupart des éléments décrits en se référant aux figures 1 et 3. Ils portent les mêmes références.

En mode de fonctionnement hiver (mode chauffage),

- la source chaude 20 comporte un échangeur de chaleur 21 placé à la partie inférieure 22 du siège 1 et

- la source froide est constituée par toute ou partie de la surface 4, 5 du siège au contact de l'utilisateur.

L'échangeur de chaleur 21 est alimenté par de l'eau à une température plus élevée que la température moyenne du siège. La température est telle que tout point de l'enveloppe souple est à une température inférieure à la partie de l'enveloppe souple 6 en contact avec l'échangeur 21.

L'échange thermique s'effectue au contact de la source froide 4, 5. Le fluide 32, vaporisé au niveau de l'échangeur de chaleur 21, se condense instantanément au contact de la source froide 4, 5 et apporte de la chaleur à ladite zone prédéterminée de la surface du siège à réchauffer. Le fluide condensé s'écoule par gravité vers les parties basses de l'enveloppe, au niveau de la source chaude 20 et de l'échangeur de chaleur 21 . Ce mode de chauffage peut être utilisé en préconditionnement du siège ou lorsqu'un passager est assis

Les équations thermiques en mode de fonctionnement chauffage sont les suivantes :

$$T3 > T4$$

$$Tmc = (T3 + T4)/ 2$$

$$Tmc > Tbi$$

$$Q = \text{Somme des } Qi + \text{Pertes}$$

T3 désignant la température d'entrée de l'échangeur 21.

T4 désignant la température de sortie de l'échangeur 21.

Qi désignant la charge calorifique fournie à l'extérieur (au passager) par la zone i des surfaces 4 et 5.

Tbi désignant les températures des zones i .

On notera qu'en mode de fonctionnement hiver (mode chauffage), l'échangeur 8 situé à la partie supérieure 9 du siège 1 est à l'arrêt.

Inversement, en mode de fonctionnement été (rafraîchissement), l'échangeur 21 situé à la partie inférieure 22 du siège 1 est à l'arrêt.

On va maintenant décrire la figure 3 qui représente une vue en coupe, selon un plan vertical A - A, du siège représenté sur la figure 1. Sur cette figure 3, on reconnaît les éléments décrits en se référant aux figures 1 et 2, ils portent les mêmes références. La figure 3 montre la position de l'échangeur supérieur 8 et de l'échangeur inférieur 21, respectivement situés à la tête 9 et à la partie inférieure du siège 20, au contact thermique de l'enveloppe souple étanche 6, 31. La figure 3 montre également la position de l'enveloppe souple 6, 31 contenant le fluide caloporteur 32, sous le revêtement extérieur 33 du siège, au contact thermique du corps du passager. Les circuits d'alimentation 34a et 34b raccordent l'échangeur supérieur 8 au système de climatisation du véhicule. Les circuits d'alimentation 35a et 35b raccordent l'échangeur inférieur 21 au système de chauffage du véhicule.

On va maintenant décrire la figure 4 qui représente une vue en perspective du siège du véhicule représenté sur les figures 1 à 3 et une vue schématique des circuits d'alimentation des échangeurs situés à la partie supérieure et à la partie inférieure du siège. Sur cette figure 4, on reconnaît les éléments décrits en se référant aux figures 1 à 3, ils portent les mêmes références. La figure 4 montre les circuits de raccordement 34a et 34 b de l'échangeur thermique 8 au système de climatisation. En pratique, ils sont raccordés à un échangeur de chaleur 40. L'échangeur de chaleur 40 est branché sur le circuit de climatisation du véhicule, par l'intermédiaire des canalisations 41a et 41b. Un circulateur 42 permet de contrôler le fonctionnement de l'échangeur supérieur 8. Une électrovanne 43 permet de contrôler le fonctionnement de l'échangeur inférieur 21 ; un circulateur n'est pas nécessaire car les circuits de refroidissement des moteurs sont dotés d'une pompe.

Même si la réalimentation de la partie évaporatrice de l'enveloppe souple à effet caloduc peut être faite par effet capillaire, la réalimentation en liquide est toujours plus efficace lorsque les surfaces de condensation sont à la partie supérieure. Toutefois, dans certaines variantes de réalisation une réalimentation par effet capillaire pourra être préféré. En ce cas, le pôle condensation ne sera plus nécessairement disposé à la partie supérieure de l'enveloppe souple.

Le procédé et le système selon l'invention qui a été décrit en se référant au cas d'un siège de véhicule de transport pourrait être appliqué aux parois, au toit ou au plancher d'une enceinte, notamment à l'habitacle d'un véhicule de transport.

**Revendications**

1. Procédé pour contrôler la température des parois d'une surface (4, 5) plane et/ou gauche, située à l'intérieur d'une enceinte, notamment à l'intérieur de l'habitacle d'un véhicule, ledit procédé comprend les étapes suivantes :

   - d'appliquer sur ladite surface une enveloppe souple (6) épousant la forme de ladite surface, ladite enveloppe étant composée d'un feuillet (30) délimitant une chambre étanche (31), formant caloduc, de faible épaisseur par rapport à son étendue,
   - d'introduire dans ladite chambre un fluide (32) sous sa tension de vapeur à une température prédéterminée, notamment de l'eau,
   - de procéder à un échange de chaleur entre ledit fluide et l'extérieur de ladite enceinte au moyen d'au moins une source froide (7) et/ou d'une source chaude (20), formant échangeur de chaleur, en contact thermique avec l'enveloppe souple, ledit échange thermique s'effectuant en au moins une zone prédéterminée de ladite surface (4, 5).

2. Procédé selon la revendication 1 tel que :

   - la ou les sources froides sont disposées aux points hauts (9) de l'enveloppe souple (6).

3. Procédé selon l'une quelconque des revendications 1 ou 2 tel que

   - la ou les sources chaudes sont disposées aux points bas (22) de l'enveloppe souple (6).

4. Application du procédé selon l'une quelconque des revendications 1 à 3 au préconditionnement thermique ou au contrôle thermique d'un siège (1), notamment d'un siège de véhicule.

5. Application selon la revendication 4 telle que :

   - en mode de fonctionnement été,

     * la source froide (7), échangeant de la chaleur avec l'extérieur de l'enceinte par l'intermédiaire du fluide, comporte un échangeur de chaleur (8) placé à la tête (9) du siège (1) et
     * la source chaude est donc constituée par tout ou partie de la surface (4, 5) du siège au contact de l'utilisateur,

   - en mode de fonctionnement hiver,

     * la source chaude (20), échangeant de la chaleur avec l'extérieur de l'enceinte par l'intermédiaire du fluide, comporte un échangeur de chaleur (21) placé à la partie inférieure (22) du siège (1) et
     * la source froide est donc constituée par tout ou partie de la surface (4, 5) du siège au contact de l'utilisateur.

6. Application du procédé selon l'une quelconque des revendications 1 à 3 au préconditionnement thermique ou au contrôle thermique de tout ou partie des parois d'une enceinte, notamment d'un véhicule.

7. Système pour contrôler la température des parois d'une surface (4, 5) plane et/ou gauche, située à l'intérieur d'une enceinte, notamment à l'intérieur de l'habitacle d'un véhicule, ledit système comprend :

   - une enveloppe souple (6) épousant la forme de ladite surface, ladite enveloppe étant composée d'un feuillet (30) délimitant une chambre étanche (31), formant caloduc, de faible épaisseur par rapport à son étendue,
   - un fluide (32), notamment de l'eau, contenu dans ladite chambre sous sa tension de vapeur à une température prédéterminée,
   - une source froide (7) et/ou une source chaude (20) en contact thermique avec l'enveloppe souple (6) en au moins une zone prédéterminée de ladite surface (4, 5) ; **caractérisé en ce que** ladite source froide (7) et/ou ladite source chaude (20) comportent respectivement un échangeur de chaleur échangeant de la chaleur avec l'extérieur de ladite enceinte.

8. Système selon la revendication 8 tel que :

   - la ou les sources froides sont disposées aux points hauts (9) de l'enveloppe souple (6).

9. Système selon l'une quelconque des revendications 8 ou 9 tel que la ou les sources chaudes sont disposées aux points bas (22) de l'enveloppe souple (6).

10. Utilisation du système selon l'une quelconque des revendications 8 à 10 au préconditionnement thermique ou au contrôle thermique des parois d'un habitacle et/ou d'un siège (1), notamment d'un siège situé dans l'habitacle d'un véhicule.

11. Utilisation du système selon la revendication 11 telle que :

    - en mode de fonctionnement été,

      * la source froide (7), échangeant de la chaleur avec l'extérieur de l'habitacle par l'intermédiaire du fluide, comporte un échangeur de chaleur (8) placé à la tête (9) du siège (1) et

* la source chaude est donc constituée par tout ou partie de la surface (4, 5) du siège au contact de l'utilisateur,

- en mode de fonctionnement hiver,

* la source chaude (20), échangeant de la chaleur avec l'extérieur de l'habitacle par l'intermédiaire du fluide, comporte un échangeur de chaleur (21) placé à la partie inférieure (22) du siège (1) et
* la source froide est donc constituée par tout ou partie de la surface (4, 5) du siège au contact de l'utilisateur.

**Patentansprüche**

1. Verfahren zum Steuern der Wandungstemperatur einer ebenen und/oder unregelmäßigen Fläche (4, 5), die sich im Inneren eines Raumes befindet, insbesondere im Passagierraum eines Fahrzeuges, wobei das Verfahren die folgenden Schritte umfasst:

   - Auflegen einer flexiblen Hülle (6) auf diese Fläche, welche deren Form annimmt, wobei diese Hülle aus einer Folie (30) besteht, die eine versiegelte Kammer (31) begrenzt, welche ein Wärmerohr bildet und deren Stärke im Verhältnis zu ihrer Ausdehnung gering ist,
   - Einführen eines Fluidums (32) in diese Kammer unter seinem Dampfdruck bei einer vorgegebenen Temperatur, insbesondere Wasser,
   - Herbeiführen eines Wärmeaustausches zwischen diesem Fluidum und dem Äußeren des Raumes über mindestens eine Kältequelle (7) und/oder eine Wärmequelle (20), die einen Wärmetauscher durch thermischen Kontakt mit der flexiblen Hülle bildet, wobei der Wärmeaustausch an mindestens einem vorgegebenen Bereich der Fläche (4, 5) stattfindet.

2. Verfahren nach Anspruch 1, bei dem:

   - die Kältequelle bzw. die Kältequellen an den oberen Punkten (9) der flexiblen Hülle (6) angebracht ist bzw. sind.

3. Verfahren nach einem der Ansprüche 1 oder 2, bei dem:

   - die Wärmequelle bzw. die Wärmequellen an den unteren Punkten (22) der flexiblen Hülle (6) angebracht ist bzw. sind.

4. Anwendung des Verfahrens nach einem der Ansprüche 1 bis 3 zur thermischen Vorkonditionierung oder zur thermischen Steuerung eines Sitzes (1), insbesondere eines Fahrzeugsitzes.

5. Anwendung nach Anspruch 4, bei der:

   - im Sommerbetriebsmodus

     * die Kältequelle (7), welche Wärme mit dem Äußeren des Raumes über ein Fluidum tauscht, einen am Kopf (9) des Sitzes (1) angebrachten Wärmetauscher (8) umfasst, und
     * die Wärmequelle demnach durch die gesamte oder einen Teil der Fläche (4, 5) des Sitzes gebildet wird, die mit dem Benutzer in Berührung ist,

   - im Winterbetriebsmodus

     * die Wärmequelle (20), welche Wärme mit dem Äußeren des Raumes über ein Fluidum tauscht, einen Wärmetauscher (21) umfasst, der am unteren Teil (22) des Sitzes (1) angebracht ist, und
     * die Kältequelle demnach durch die gesamte oder einen Teil der Fläche (4, 5) des Sitzes gebildet wird, die mit dem Benutzer in Berührung ist.

6. Anwendung des Verfahrens nach einem der Ansprüche 1 bis 3 auf das thermische Vorkonditionieren oder auf das thermische Steuern der Gesamtheit oder eines Teiles der Seiten eines Raumes, insbesondere eines Fahrzeuges.

7. System zum Steuern der Wandungstemperatur einer ebenen und/oder unregelmäßigen Fläche (4, 5), die sich im Inneren eines Raumes, insbesondere im Passagierraum eines Fahrzeuges, befindet, wobei das System folgendes umfasst:

   - eine flexible Hülle (6), welche die Form der erwähnten Fläche annimmt, wobei diese Hülle aus einer Folie (30) besteht, die eine versiegelte Kammer (31) begrenzt, welche ein Wärmerohr bildet und deren Stärke im Verhältnis zu ihrer Ausdehnung gering ist,
   - ein Fluidum (32), insbesondere Wasser, das unter seinem Dampfdruck bei einer vorgegebenen Temperatur in dieser Kammer enthalten ist,
   - eine Kältequelle (7) und/oder eine Wärmequelle (20), die an mindestens einem vorgegebenen Bereich der Fläche (4, 5) in thermischem Kontakt mit der flexiblen Hülle (6) ist,

   **dadurch gekennzeichnet, dass** die Kältequelle (7) und/oder die Wärmequelle (20) jeweils einen Wärmetauscher umfassen, der Wärme mit dem Äußeren des Raumes tauscht.

8. System nach Anspruch 7, bei dem:

- die Kältequelle bzw. die Kältequellen an den oberen Punkten (9) der flexiblen Hülle (6) angebracht ist bzw. sind.

9. System nach einem der Ansprüche 7 oder 8, bei dem die Wärmequelle bzw. die Wärmequellen an den unteren Punkten (22) der flexiblen Hülle (6) angebracht ist bzw. sind.

10. Verwendung eines Systems nach den Ansprüchen 7 bis 9 für das thermische Vorkonditionieren oder das thermische Steuern der Wandungen eines Passagierraums und/oder eines Sitzes (1 ), insbesondere eines Sitzes im Passagierraum eines Fahrzeuges.

11. Anwendung des Systems nach Anspruch 10, derart dass:

- im Sommerbetriebsmodus

  * die Kältequelle (7), welche Wärme mit dem Äußeren des Raumes über ein Fluidum tauscht, einen am Kopf (9) des Sitzes (1 ) angebrachten Wärmetauscher (8) umfasst, und
  * die Wärmequelle (20) demnach durch die gesamte oder einen Teil der Fläche (4, 5) des Sitzes gebildet wird, die mit dem Benutzer in Berührung ist,

- im Winterbetriebsmodus

  * die Wärmequelle, welche Wärme mit dem Äußeren des Raumes über ein Fluidum tauscht, einen Wärmetauscher (21) umfasst, der am unteren Teil (22) des Sitzes (1 ) angebracht ist, und
  * die Kältequelle demnach durch die gesamte oder einen Teil der Fläche (4, 5) des Sitzes gebildet wird, die mit dem Benutzer in Berührung ist.

**Claims**

1. A process for controlling the temperature of the walls of a planar and/or skew surface (4, 5) situated within an enclosure, in particular within the passenger compartment of a vehicle,
   said process comprising the following steps:

- applying to said surface a flexible cover (6) conforming in shape to the shape of said surface, said cover being composed of a lamina (30) delimiting an impervious chamber (31) forming a heat-pipe of slight thickness in relation to its area,
- introducing into said chamber a fluid (32) under its vapour pressure at a predetermined temperature, in particular water,
- carrying out an exchange of heat between said fluid and the outside of said enclosure by means of at least one cold-source (7) and/or a heat-source (20) forming a heat-exchanger in thermal contact with the flexible cover, said thermal exchange being effected in at least one predetermined zone of said surface (4, 5).

2. Process according to Claim 1, such that:

- the cold-source or cold-sources is/are disposed at the high points (9) of the flexible cover (6).

3. Process according to any one of Claims 1 or 2, such that:

- the heat-source or heat-sources is/are disposed at the low points (22) of the flexible cover (6).

4. Application of the process according to any one of Claims 1 to 3 to the thermal preconditioning or the thermal control of a seat (1), in particular a seat of a vehicle.

5. Application according to Claim 4, such that:

- in the 'summer' operating mode

  • the cold-source (7) exchanging heat with the outside of the enclosure through the agency of the fluid includes a heat-exchanger (8) placed at the top (9) of the seat (1) and
  • the heat-source is therefore constituted by all or part of the surface (4, 5) of the seat in contact with the user,

- in the 'winter' operating mode

  • the heat-source (20) exchanging heat with the outside of the enclosure through the agency of the fluid includes a heat-exchanger (21) placed in the lower part (22) of the seat (1) and
  • the cold-source is therefore constituted by all or part of the surface (4, 5) of the seat in contact with the user.

**6.** Application of the process according to any one of Claims 1 to 3 to the thermal preconditioning or the thermal control of all or part of the walls of an enclosure, in particular of a vehicle.

**7.** A system for controlling the temperature of the walls of a planar and/or skew surface (4, 5) situated within an enclosure, in particular within the passenger compartment of a vehicle, said system comprising:

- a flexible cover (6) conforming in shape to the shape of said surface, said cover being composed of a lamina (30) delimiting an impervious chamber (31) forming a heat-pipe of slight thickness in relation to its area,
- a fluid (32), in particular water, contained in said chamber under its vapour pressure at a predetermined temperature,
- a cold-source (7) and/or a heat-source (20) in thermal contact with the flexible cover (6) in at least one predetermined zone of said surface (4, 5), **characterised in that** said cold-source (7) and/or said heat-source (20) respectively include(s) a heat-exchanger exchanging heat with the outside of said enclosure.

**8.** System according to Claim 7, such that:

- the cold-source or cold-sources is/are disposed at the high points (9) of the flexible cover (6) .

**9.** System according to any one of Claims 7 or 8, such that:

- the heat-source or heat-sources are disposed at the low points (22) of the flexible cover (6).

**10.** Use of the system according to any one of Claims 7 to 9 for the thermal preconditioning or thermal control of the walls of a passenger compartment and/or a seat (1), in particular a seat situated in the passenger compartment of a vehicle.

**11.** Use of the system according to Claim 10, such that:

- in the 'summer' operating mode

  • the cold-source (7) exchanging heat with the outside of the passenger compartment through the agency of the fluid includes a heat-exchanger (8) placed at the top (9) of the seat (1) and
  • the heat-source is therefore constituted by all or part of the surface (4, 5) of the seat in contact with the user,

- in the 'winter' operating mode

  • the heat-source (20) exchanging heat with the outside of the passenger compartment through the agency of the fluid includes a heat-exchanger (21) placed in the lower part (22) of the seat (1) and
  • the cold-source is therefore constituted by all or part of the surface (4, 5) of the seat in contact with the user.

Fig. 1

Fig. 2

Fig. 3

Fig. 4